# EUROPEAN PATENT APPLICATION

(11) **EP 4 603 817 A1**
(43) Date of publication of application: **20.08.2025**
(21) Application number: 24875871.6
(22) Date of filing: 09.01.2024
(51) Int. Cl.: G01M 3/26

(54) **AIRTIGHTNESS DETECTION METHOD AND TEST SYSTEM**

(30) Priority: 08.10.2023 CN 202311288434
(71) Applicant: Contemporary Amperex Technology (Hong Kong) Limited, Central (HK)
(72) Inventor: QIU, Shiping, Ningde, Fujian 352100 (CN); XIE, Weihong, Ningde, Fujian 352100 (CN); LIU, Yang, Ningde, Fujian 352100 (CN); ZHAO, Bin, Ningde, Fujian 352100 (CN); YU, Dingshan, Ningde, Fujian 352100 (CN)
(74) Representative: von Tietzen und Hennig, Nikolaus
(86) International application number: PCT/CN2024/071320
(87) International publication number: WO 2025/077039

(57) **Abstract**

Embodiments of this disclosure disclose an air tightness check method and a test system. The test system includes a control apparatus, a scanning apparatus, a pressing apparatus and a check apparatus. The air tightness check method includes: in response to a battery pack flowing into an air tightness testing station, controlling, by the control apparatus, the scanning apparatus to identify the battery pack to obtain parameter information of the battery pack, where the parameter information of the battery pack represents basic attributes of the battery pack and a position of the battery pack in the air tightness testing station; controlling, by the control apparatus based on the parameter information of the battery pack, the pressing apparatus to press down the battery pack; and controlling, by the control apparatus, the check apparatus to check air tightness of the pressed battery pack.

## Description

### CROSS-REFERENCE TO RELATED APPLICATIONS

This disclosure is based on and claims priority to Chinese patent application No. 202311288434.1, filed on October 8, 2023 and entitled "AIR TIGHTNESS CHECK METHOD AND TEST SYSTEM", which is incorporated herein by reference in its entirety.

### TECHNICAL FIELD

This disclosure relates to, but is not limited to, the technical field of battery manufacturing, and in particular, to an air tightness check method and a test system.

### BACKGROUND

New energy batteries are increasingly widely used in life and industry. For example, new energy vehicles equipped with batteries have been widely used. In addition, batteries are increasingly used in the field of energy storage, and the like.

Before battery packs are delivered from the factory, air tightness of the battery packs needs to be checked to verify whether the battery packs meet the protection level requirements. In the related art, for different types of battery packs, different test devices are used to test the air tightness of the corresponding battery packs. However, this method is not conducive to changeover of the production line, leading to low changeover efficiency.

### SUMMARY

In view of this, embodiments of this disclosure at least provide an air tightness check method and a test system, which can automatically check air tightness of inflowing battery pack regardless of a current type of the battery pack flowing into an air tightness testing station. The check rate is high and the cost of changeover is low.

A technical solution of the embodiments of this disclosure is implemented as follows.

According to one aspect, an embodiment of this disclosure provides an air tightness check method, which is applied to a test system, and the test system includes a control apparatus, a scanning apparatus, a pressing apparatus, and a check apparatus. The air tightness check method includes: in response to a battery pack flowing into an air tightness testing station, controlling, by the control apparatus, the scanning apparatus to identify the battery pack to obtain parameter information of the battery pack; and the parameter information of the battery pack represents basic attributes of the battery pack and a position of the battery pack in the air tightness testing station; controlling, by the control apparatus based on the parameter information of the battery pack, the pressing apparatus to press down the battery pack; and controlling, by the control apparatus, the check apparatus to check air tightness of the pressed battery pack.

Understandably, through the test system integrated with the control apparatus, the scanning apparatus, the pressing apparatus, and the check apparatus, the automatic identification of the battery pack, the automatic pressing to the battery pack, and the automatic check of the air tightness of the battery pack can be realized. In this way, all kinds of control of the air tightness testing station are highly integrated into the control apparatus of the test system, and the process control of the whole air tightness check and the mechanical trajectory control of the pressing apparatus can be realized through the control apparatus of the test system. Thus, regardless of the type of battery pack currently flowing into the air tightness testing station, the air tightness of the inflowing battery pack can be automatically checked, and the whole check process does not need manual operation, so that the check rate is increased and the cost of changeover is reduced.

In some embodiments, the controlling, by the control apparatus, the scanning apparatus to identify the battery pack includes: determining, by the control apparatus, whether an inflation port of the battery pack has been blocked; and when it is determined that the inflation port of the battery pack has been blocked, controlling, by the control apparatus, the scanning apparatus to identify the battery pack.

Understandably, after it is determined that the inflation port of the battery pack has been blocked, identification and subsequent check operations are performed. In this way, effectively sealing the inflation port of the battery pack can improve the check accuracy of the air tightness of the battery pack.

In some embodiments, the determining, by the control apparatus, whether the inflation port of the battery pack has been blocked includes: in response to a blocking signal for the battery pack, determining, by the control apparatus, that the inflation port of the battery pack has been blocked; or in response to a test instruction for the battery pack, determining, by the control apparatus based on the blocking information in the test instruction, that the inflation port of the battery pack has been blocked.

Understandably, both the blocking signal and the blocking information are used to let the test system learn that the battery pack has been blocked.

In some embodiments, the parameter information of the battery pack includes an identifier of the battery pack, a position of the battery pack, and a dimension of the battery pack. The controlling, by the control apparatus based on the parameter information of the battery pack, the pressing apparatus to press down the battery pack includes: verifying, by the control apparatus, the battery pack based on the identifier of the battery pack; and under a condition that a verification result represents that the battery pack has passed the verification, controlling, by the control apparatus based on the position of the battery pack and the dimension of the battery pack, the pressing apparatus to press down the battery pack.

Understandably, the battery pack is verified by the control apparatus, and error-proofing and fool-proofing control can also be performed in the testing process, so as to reduce the impact to subsequent checks caused when the battery pack not belonging to the current production line flows into the air tightness testing station due to manual operation errors. Thus, the accuracy of subsequent checks can be improved.

In some embodiments, the verifying, by the control apparatus, the battery pack based on the identifier of the battery pack includes: determining, by the control apparatus, a reference identifier, prestored in a server, of a battery pack to be checked; and verifying, by the control apparatus, the battery pack based on the reference identifier and the identifier of the battery pack.

Understandably, the battery pack is verified based on the reference identifier of the battery pack prestored in the server and the identifier of the battery pack obtained in real time, so that whether the battery pack currently flowing into the air tightness testing station is wrong or not can be determined, guaranteeing the accuracy of subsequent testing.

In some embodiments, the verifying, by the control apparatus, the battery pack based on the reference identifier and the identifier of the battery pack includes: under a condition that the reference identifier matches the identifier of the battery pack, determining, by the control apparatus, a verification result representing that the battery pack has passed the verification; or under a condition that the reference identifier does not match the identifier of the battery pack, determining, by the control apparatus, a verification result representing that the battery pack has failed to pass the verification.

Understandably, the battery pack is verified based on a matching relationship between the reference identifier of the battery pack prestored in the server and the identifier of the battery pack obtained in real time, so that whether the battery pack currently flowing into the air tightness testing station is wrong or not can be determined, guaranteeing the accuracy of subsequent testing.

In some embodiments, the pressing apparatus includes a plurality of pressing blocks; and the controlling, by the control apparatus based on the position of the battery pack and the dimension of the battery pack, the pressing apparatus to press down the battery pack includes: determining, by the control apparatus, at least one first pressing block from the plurality of pressing blocks based on the position of the battery pack, positions of the plurality of pressing blocks, and the dimension of the battery pack; and controlling, by the control apparatus, the at least one first pressing block to press down the battery pack.

Understandably, the control apparatus controls the at least one first pressing block selected from the plurality of pressing blocks in the pressing apparatus to press down the battery pack. In this way, the pressing block is selected adaptively according to the dimension and position of the battery pack, and only some pressing blocks rather than all the pressing blocks are used during pressing. As compared with the related art in which all pressing blocks are used during pressing, the control accuracy of the pressing apparatus is higher, and additional mechanical loss can be reduced.

In some embodiments, the determining, by the control apparatus, at least one first pressing block from the plurality of pressing blocks based on the position of the battery pack, positions of the plurality of pressing blocks, and the dimension of the battery pack includes: determining, by the control apparatus, a plurality of second pressing blocks from the plurality of pressing blocks based on the position of the battery pack and the positions of the plurality of pressing blocks; and determining, by the control apparatus, the at least one first pressing block from the plurality of second pressing blocks based on the dimension of the battery pack and a preset condition; where the preset condition includes that a ratio of a sum of areas of a pressing surface(s) of the at least one first pressing block and an area of a pressed surface of the battery pack meets a preset ratio.

Understandably, a contact surface between a pressed surface of the battery pack and a pressing surface of the at least one first pressing block is defined based on the dimension and preset condition of the battery pack, so that a pressing block that is more suitable for pressing the current battery pack can be determined, guaranteeing the stability of the battery pack under pressure while reducing the mechanical loss.

In some embodiments, the pressing apparatus further includes a locking mechanism. The air tightness check method further includes: controlling, by the control apparatus, the locking mechanism to lock the pressed battery pack.

Understandably, the pressed battery pack is locked by the locking mechanism, so that the position of the battery pack can be fixed, avoiding occurrence of an inaccurate check result caused by displacement of the battery pack during the testing process.

In some embodiments, the controlling, by the control apparatus, the check apparatus to check air tightness of the pressed battery pack includes: controlling, by the control apparatus, the check apparatus to inflate a pack body of the pressed battery pack and a cavity of a cooling system of the pressed battery pack, after a first inflation pipe of the check apparatus is connected to an inflation port of the pack body of the pressed battery pack, and a second inflation pipe of the check apparatus is connected to an inflation port of the cavity of the cooling system of the pressed battery pack; and controlling, by the control apparatus, the check apparatus to check the air tightness of the inflated battery pack and air tightness of the inflated cooling system of the battery pack.

Understandably, the air tightness of the battery pack after inflation and the air tightness of the cooling system of the battery pack after inflation can be checked from two aspects which are the battery pack itself and the cooling system of the battery pack.

In some embodiments, the air tightness check method further includes: under a condition that an air tightness check result represents that the battery pack has passed the air tightness check, controlling, by the control apparatus, the pressing apparatus to rise; storing, by the control apparatus, the air tightness check result to the server; and controlling, by the control apparatus, the battery pack to flow out of the air tightness testing station.

Understandably, the battery pack can be controlled to flow out of the air tightness testing station under a condition that the air tightness check result represents that the battery pack has passed the air-tight check. In addition, the air tightness check result can be stored into the server, facilitating the subsequent obtaining of the air tightness check result and ensuring the traceability of the check process.

In some embodiments, the air tightness check method further includes: controlling, by the control apparatus, an automated guided vehicle to guide the battery pack to flow into the air tightness testing station; and controlling, by the control apparatus, the automated guided vehicle to guide the battery pack to flow out of the air tightness testing station.

Understandably, with the automated guided vehicle being controlled, the battery pack can automatically flow into the air tightness testing station or flow out of the air tightness testing station.

In some embodiments, each pressing block is provided with a ranging sensor; and the controlling, by the control apparatus, the at least one first pressing block to press down the battery pack includes: determining, by the control apparatus, a distance between the at least one pressing block and the battery pack through the ranging sensor; and controlling, by the control apparatus based on the distance, the at least one first pressing block to press down the battery pack.

Understandably, at least one first pressing block is controlled to press down the battery pack based on the distance between the at least one pressing block and the battery pack determined by the ranging sensor. In this way, appropriate pressure can be applied to the battery pack, and the inaccuracy of the air tightness check result of the battery pack, caused by an excessively large or excessively small pressure, is avoided.

In some embodiments, each pressing block is provided with a first pressure sensor; and the controlling, by the control apparatus, the at least one first pressing block to press down the battery pack includes: controlling, by the control apparatus, the at least one first pressing block to press down the battery pack and to stop the pressing operation after the control apparatus checks that a pressure value of the first pressure sensor reaches a first pressure value.

Understandably, whether to stop the pressing operation or not is determined by comparing the pressure value of the first pressure sensor with the first pressure value. In this way, appropriate pressure can be applied to the battery pack, and the inaccuracy of the air tightness check result of the battery pack, caused by an excessively large or excessively small pressure, is avoided.

In some embodiments, a second pressure sensor is arranged at an exhaust port of the battery pack. The controlling, by the control apparatus, the check apparatus to check the air tightness of the inflated battery pack includes: obtaining, by the control apparatus, a real-time pressure value of the second pressure sensor; under a condition that the real-time air pressure value meets a second pressure value, determining, by the control apparatus, that the pack body of the battery pack has passed the air tightness check; or under a condition that the real-time air pressure value does not meet the second pressure value, determining, by the control apparatus, that the pack body of the battery pack has failed to pass the air tightness check.

Understandably, the air tightness check result can be determined by comparing the real-time pressure value checked by the second pressure sensor arranged at the exhaust port of the battery pack with the second pressure value. In this way, the accuracy of the air tightness check result can be improved.

According to another aspect, an embodiment of this disclosure provides a test system. The test system includes a control apparatus, a scanning apparatus, a pressing apparatus and a check apparatus. The control apparatus is configured to, in response to a battery pack flowing into an air tightness testing station, control the scanning apparatus to identify the battery pack; control, based on parameter information of the battery pack identified by the scanning apparatus, the pressing apparatus to press down the battery pack; and control the check apparatus to check air tightness of the pressed battery pack; where the parameter information of the battery pack represents basic attributes of the battery pack and a position of the battery pack in the air tightness testing station. The scanning apparatus is configured to identify the battery pack; the pressing apparatus is configured press down the battery pack. The check apparatus is configured to check the air tightness of the pressed battery pack.

Understandably, through the test system integrated with the control apparatus, the scanning apparatus, the pressing apparatus, and the check apparatus, the automatic identification of the battery pack, the automatic pressing to the battery pack, and the automatic check of the air tightness of the battery pack can be realized. In this way, all kinds of control of the air tightness testing station are highly integrated into the control apparatus of the test system, and the process control of the whole air tightness check and the mechanical trajectory control of the pressing apparatus can be realized through the control apparatus of the test system. Thus, regardless of the type of battery pack currently flowing into the air tightness testing station, the air tightness of the inflowing battery pack can be automatically checked, and the whole check process does not need manual operation, so that the check rate is increased and the cost of changeover is reduced.

In some embodiments, the parameter information of the battery pack includes an identifier of the battery pack. The control apparatus is further configured to verify the battery pack based on the identifier of the battery pack.

Understandably, the battery pack is verified by the control apparatus, and error-proofing and fool-proofing control can also be performed in the testing process, so as to reduce the impact to subsequent checks caused when the battery pack not belonging to in the current production line flows into the air tightness testing station due to manual operation errors. Thus, the accuracy of subsequent checks can be improved.

In some embodiments, the parameter information of the battery pack includes the position of the battery pack and the dimension of the battery pack. The pressing apparatus includes a plurality of pressing blocks. The control apparatus is further configured determine at least one first pressing block from the plurality of pressing blocks based on the position of the battery pack, positions of the plurality of pressing blocks, and the dimension of the battery pack, and control the at least one first pressing block to press down the battery pack.

Understandably, the control apparatus controls the at least one first pressing block selected from the plurality of pressing blocks in the pressing apparatus to press down the battery pack. In this way, the pressing block is selected adaptively based on the dimension and position of the battery pack, and only some pressing blocks rather than all pressing blocks are used during pressing. As compared with the related art in which all pressing blocks are used during pressing, the control accuracy of the pressing apparatus is higher, and additional mechanical loss can be reduced.

In some embodiments, the control apparatus is further configured to, in response to a plurality of battery packs flowing into a plurality of air tightness testing stations, control the scanning apparatus, the pressing apparatus, and the check apparatus in each air tightness testing station in parallel to perform air tightness check of the corresponding battery pack.

Understandably, the air tightness checks of the plurality of air tightness testing stations are controlled by one control apparatus. In this way, the efficiency of air tightness check can be improved, time consumption can be reduced, and the layout of the test system can be simplified.

In some embodiments, each pressing block is provided with a ranging sensor; the ranging sensor is configured to measure a distance between each pressing block and the battery pack.

In some embodiments, each pressing block is provided with a first pressure sensor; and the first pressure sensor is configured to monitor a pressure received by each pressing block.

In some embodiments, a second pressure sensor is arranged at an exhaust port of the battery pack; the second pressure sensor is configured to monitor an air pressure in the battery pack; correspondingly, a third pressure sensor is arranged at an exhaust port of a cavity of a cooling system of the battery pack; and the third pressure sensor is configured to monitor an air pressure in the cooling system of the battery pack.

In some embodiments, the pressing apparatus includes a plurality of driving apparatuses; and the plurality of driving apparatuses are in one-to-one correspondence to the plurality of pressing blocks. Each of the plurality of driving apparatuses is configured to drive the corresponding pressing block to move towards the battery pack, so as to realize a pressing operation on the battery pack.

Understandably, the driving apparatus drives the pressing block to move towards the battery pack, such that accurate pressing can be realized and the pressing accuracy can be improved.

In some embodiments, the pressing apparatus further includes a locking mechanism for the plurality of pressing blocks.

The locking mechanism is configured lock the pressed battery pack.

Understandably, the pressed battery pack is locked by the locking mechanism, so that the position of the battery pack can be fixed, avoiding occurrence of an inaccurate check result caused by displacement of the battery pack during the testing process.

In some embodiments, the control apparatus is further configured to control the automated guided vehicle to guide the battery pack to flow into the air tightness testing station, and control the automated guided vehicle to guide the battery pack to flow out of the air tightness testing station.

Understandably, with the automated guided vehicle being controlled, the battery pack can automatically flow into the air tightness testing station or flow out of the air tightness testing station.

In the embodiments of this disclosure, through the test system integrated with the control apparatus, the scanning apparatus, the pressing apparatus and the check apparatus, the automatic identification of the battery pack, the automatic pressing to the battery pack, and the automatic check of the air tightness of the battery pack can be realized. In this way, all kinds of control of the air tightness testing station are highly integrated into the control apparatus of the test system, and the process control of the whole air tightness check and the mechanical trajectory control of the pressing apparatus can be realized through the control apparatus of the test system. Thus, regardless of the type of battery pack currently flowing into the air tightness testing station, the air tightness of the inflowing battery pack can be automatically checked, and the whole check process does not need manual operation, so that the check rate is increased and the cost of changeover is reduced.

It should be understood that both the foregoing general description and the following detailed description are merely exemplary and illustrative, and are not intended to limit the technical solutions of this disclosure.

### BRIEF DESCRIPTION OF DRAWINGS

The drawings, which are incorporated in and constitute a part of the present specification, illustrate some embodiments of this disclosure and are used together with the specification to interpret the technical solutions of this disclosure.
FIG. 1 is a first schematic flowchart of an implementation of an air tightness check method according to an embodiment of this disclosure;
FIG. 2 is a second schematic flowchart of an implementation of an air tightness check method according to an embodiment of this disclosure;
FIG. 3 is a schematic flowchart of an implementation of a test system according to an embodiment of this disclosure;
FIG. 4 is a third schematic flowchart of an implementation of an air tightness check method according to an embodiment of this disclosure;
FIG. 5 is a first schematic diagram of a layout of a test system according to an embodiment of this disclosure; and
FIG. 6 is a second schematic diagram of layout of a test system according to an embodiment of this disclosure.

The reference signs in the specific implementations are as follows:
test system 30, control apparatus 31, scanning apparatus 32, pressing apparatus 33, check apparatus 34, frame of air tightness testing station 51, industrial personal computer cabinet 52, air tightness instrument integrated cabinet 53, apparatus formed by a plurality of pressing blocks integrated 54, trunking 55; EOL adapter box 61, insulating glove placement region 62, display cabinet 63, display 631, keyboard 632, and mouse 633.

### DESCRIPTION OF EMBODIMENTS

To make objectives, technical solutions and advantages of this disclosure clearer, the following gives a clear description of the technical solutions of this disclosure with reference to the drawings and the embodiments. The described embodiments should not be regarded as limitations on this disclosure. All other embodiments derived by persons of ordinary skill in the art without making any creative effort fall within the protection scope of this disclosure.

In the following description, reference is made to "some embodiments", which describes a subset of all possible embodiments, but it can be understood that "some embodiments" may be the same subset or different subsets of all possible embodiments, and may be combined with each other without conflict.

The involved terms "first/second/third" are merely intended to distinguish between similar objects, and do not represent a specific order of the objects. It can be understood that "first/second/third" can be interchanged in a specific order or sequence if permitted, such that the embodiments of this disclosure described herein can be implemented in other orders than those illustrated or described herein.

Unless otherwise defined, all technical and scientific terms used herein bear the same meanings as what is normally understood by persons skilled in the technical field of this disclosure. The terms used herein are merely intended to describe this disclosure but not to limit this disclosure.

At present, new energy batteries are increasingly widely used in life and industry. The new energy batteries are not only used in energy storage power systems such as hydro, thermal, wind, and solar power stations, but also widely used in electric transport such as electric bicycles, electric motorcycles, and electric vehicles, and used in many other fields such as aerospace. The market demand for traction batteries keeps soaring with the increase of the application fields of the power batteries.

In the embodiments of this disclosure, the battery pack may include a plurality of battery cells. The battery cell may be a secondary battery, and the secondary battery is an individual battery that is reusable through activation of an active material in the battery cell by charging the individual battery that is discharged. The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, and a lead storage battery. The specific type of the battery cell is not limited herein.

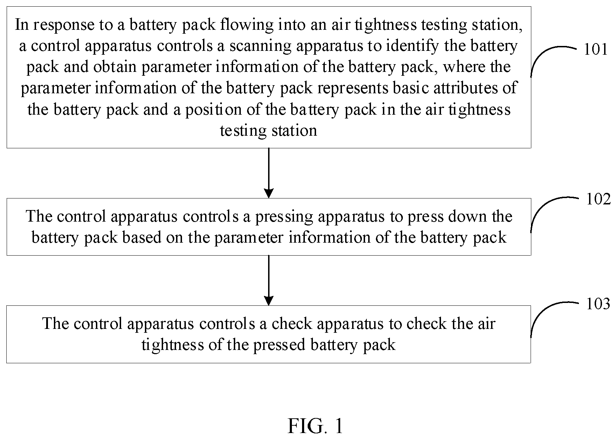

An embodiment of this disclosure provides an air tightness check method, and the method can be executed by a test system. The test system includes a control apparatus, a scanning apparatus, a pressing apparatus and a check apparatus. FIG. 1 is a first schematic flowchart of an air tightness check method provided in an embodiment of this disclosure. As shown in FIG. 1, the method includes the following steps 101 to 103.

Step 101: In response to a battery pack flowing into the air tightness testing station, the control apparatus controls the scanning apparatus to identify the battery pack to obtain the parameter information of the battery pack; where the parameter information of the battery pack represents basic attributes of the battery pack and a position of the battery pack in an air tightness testing station.

Here, the air tightness testing station is configured to check the air tightness of the battery pack. The control apparatus may refer to a test cabinet obtained after all the controls of the air tightness testing station are highly integrated, or the control apparatus may alternatively be any one of a programmable logic controller (Programmable Logic Controller, PLC), a single chip microcomputer, an intermediate computer, an upper-level computer, and an industrial computer. The control apparatus may include a processor and a memory storing instructions executable by the processor, and when the instructions are executed by the processor, the foregoing air tightness check method is implemented.

The control apparatus is specifically configured to control the scanning apparatus to identify the battery pack flowing into the air tightness testing station in response to the battery pack flowing into the air tightness testing station; control the pressing apparatus to press down the battery pack; and control the check apparatus to perform the air tightness check of the pressed battery pack.

The scanning apparatus is configured to identify the battery pack; the pressing apparatus is configured to press down the battery pack; and the check apparatus is configured to perform the air tightness check of the pressed battery pack.

The parameter information of the battery pack is used to represent the basic attributes of the battery pack and the position of the battery pack in the air tightness testing station. Exemplarily, the parameter information of the battery pack may include basic attributes such as an identifier of the battery pack, a dimension of the battery pack, a type of the battery pack, and a position of the battery pack.

The control apparatus controls the scanning apparatus to identify the battery pack, so that the automatic identification of the battery pack can be realized. In this way, regardless of the type of battery pack currently flowing into the air tightness testing station, automatic identification can be realized through the scanning apparatus, and automatic changeover can be realized without manual operation, achieving high changeover efficiency.

In an embodiment, the control apparatus controls an automated guided vehicle to guide the battery pack to flow into the air tightness testing station. The automated guided vehicle (Automated Guided Vehicle, AGV) is configured to transport battery packs.

In a feasible embodiment, after determining that the battery pack flows into the air tightness testing station, the control apparatus can control the scanning apparatus to identify the battery pack to obtain the identifier and position of the battery pack; and acquire the basic attributes of the battery pack from the server based on the identifier of the battery pack; where the obtained identifier of the battery pack, the position of the battery pack, and the basic attributes of the battery pack are collectively referred to as the parameter information of the battery pack. A manufacturing execution system (Manufacturing Execution System, MES) can be deployed on the server, and the basic attributes of the battery pack can be stored in the MES system in the server, so that the basic attributes of the battery pack are obtained from the MES system in the server.

Specifically, the method for determining the battery pack flowing into the air tightness testing station can be realized as follows: controlling the automated guided vehicle to transport the battery pack to a fixed position; or, manually sending a signal indicating that the battery pack flows into the air tightness testing station to the control apparatus.

Specifically, the method for obtaining the identifier of the battery pack and the position of the battery pack can be realized as follows: the control apparatus controls the scanning apparatus to scan a graphic code on the battery pack to obtain the identifier of the battery pack; and the control apparatus controls the scanning apparatus to check the position of the battery pack to obtain the position of the battery pack. The graphic code may be a bar code, a QR code, or the like.

Specifically, the basic attributes of the battery pack may be obtained by pre-storing the corresponding basic attributes of each battery pack in the MES system, so that the basic attributes of any battery pack can be obtained from the MES system based on the identifier of this battery pack.

Step 102: The control apparatus controls, based on the parameter information of the battery pack, the pressing apparatus to press down the battery pack.

Here, the parameter information of the battery pack may include the position and dimension of the battery pack. The control apparatus controls the pressing apparatus to press down the battery pack, aiming to press down the battery pack tightly and ensure the stability and sealing of the battery pack.

In a feasible embodiment, the pressing apparatus can be controlled to press down the battery pack based on the position and dimension of the battery pack. In this way, different pressing operations are performed based on the parameter information of the battery pack identified in real time, so that the accuracy of pressing can be improved. Regardless of a type of the battery pack to be checked currently, accurate pressing down can be performed based on the parameter information of the battery pack obtained in real time. That is, during the changeover of the production line, the accuracy of pressing is not affected.

Step 103: The control apparatus controls the check apparatus to check the air tightness of the pressed battery pack.

Here, the check apparatus is configured to perform the air tightness check of the pressed battery pack. Exemplarily, the check apparatus may be a device adopting a gas check method.

In a feasible embodiment, the control apparatus can control the check apparatus to check the air tightness of the pressed battery pack and the air tightness of the cooling system of the pressed battery pack. In this way, the air tightness check of the pressed battery pack is performed from two aspects: the air tightness of the battery pack itself and the air tightness of the cooling system of the battery pack.

Understandably, through the test system integrated with the control apparatus, the scanning apparatus, the pressing apparatus, and the check apparatus, the automatic identification of the battery pack, the automatic pressing to the battery pack, and the automatic check of the air tightness of the battery pack can be realized. In this way, all kinds of control of the air tightness testing station are highly integrated into the control apparatus of the test system, and the process control of the whole air tightness check and the mechanical trajectory control of the pressing apparatus can be realized through the control apparatus of the test system. Thus, regardless of the type of battery pack currently flowing into the air tightness testing station, the air tightness of the inflowing battery pack can be automatically checked, and the whole check process does not need manual operation, so that the check rate is increased and the cost of changeover is reduced.

In some embodiments, before "the control apparatus controls the scanning apparatus to identify the battery pack" in the foregoing step 101, whether the inflation port of the battery pack has been blocked can also be determined. In this case, a specific implementation of "the control apparatus controls the scanning apparatus to identify the battery pack" in step 101 can be realized as follows: the control apparatus determines whether the inflation port of the battery pack has been blocked; and when it is determined that the inflation port of the battery pack has been blocked, the control apparatus controls the scanning apparatus to identify the battery pack.

Here, after it is determined that the inflation port of the battery pack has been blocked, identification and subsequent check operations are performed. In this way, effectively sealing the inflation port of the battery pack can improve the check accuracy of the air tightness of the battery pack.

In an embodiment, a specific implementation of "the control apparatus determines whether the inflation port of the battery pack has been blocked" can be realized as follows: in response to the blocking signal for the battery pack, the control apparatus determines that the inflation port of the battery pack has been blocked; or, in response to a test instruction for the battery pack, the control apparatus determines that the inflation port of the battery pack has been blocked based on the blocking information in the test instruction.

Here, both the blocking signal and the blocking information are used to let the test system learn that the battery pack has been blocked.

In a feasible embodiment, after the battery pack is manually blocked, a blocking signal for the battery pack can be sent to the test system, such that the test system can learn that the battery pack has been blocked.

In another feasible embodiment, after the battery pack is manually blocked, the blocking information can be carried in the test instruction for the battery pack and sent to the test system, such that the test system can learn that the battery pack has been blocked and start the air tightness check of the battery pack.

In some embodiments, the battery pack can be pressed down after the battery pack is verified. In this case, a specific implementation of step 102 can be realized as follows: the control apparatus verifies the battery pack based on the identifier of the battery pack; and when the verification result represents that the battery pack has passed the verification, the control apparatus controls, based on the position of the battery pack and the dimension of the battery pack, the pressing apparatus to press down the battery pack.

Here, the identifier of the battery pack can be recognized by the scanning apparatus. The control apparatus is further configured to verify the battery pack, so as to perform error-proofing and fool-proofing control in the testing process and reduce the impact on subsequent checks caused when the battery pack not belonging to the current production line flows into the air tightness testing station due to manual operation errors. Thus, the accuracy of subsequent checks can be improved.

In some embodiments, a specific implementation of step 103 can be realized as follows: inflating the pressed battery pack; and checking the air tightness of the inflated battery pack and the air tightness of the cooling system of the inflated battery pack.

In a feasible embodiment, the check apparatus may include a battery pack sealing loop and a cooling system sealing loop. In this case, the air tightness of the inflated battery pack can be checked through the battery pack sealing loop in the check apparatus, and the air tightness of the cooling system can be checked through the cooling system sealing loop in the check apparatus. In this way, the air tightness check of the pressed battery pack is performed from two aspects: the battery pack itself and the cooling system of the battery pack.

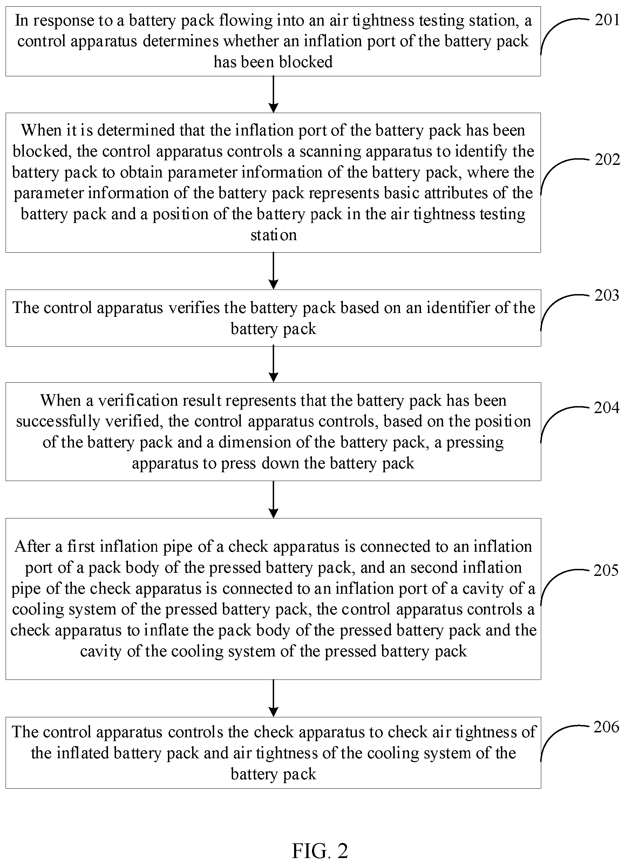

An embodiment of this disclosure provides an air tightness check method, and the method can be executed by a test system. FIG. 2 is a second schematic flowchart of an air tightness check method provided in an embodiment of this disclosure. As shown in FIG. 2, the method includes the following steps 201 to 206.

Step 201: In response to a battery pack flowing into the air tightness testing station, a control apparatus determines whether an inflation port of the battery pack has been blocked.

Step 202: When it is determined that the inflation port of the battery pack has been blocked, a control apparatus controls a scanning apparatus to identify the battery pack to obtain the parameter information of the battery pack; where the parameter information of the battery pack represents basic attributes of the battery pack and a position of the battery pack in the air tightness testing station.

Here, the foregoing steps 201 and 202 correspond to the foregoing step 101, and can be performed with reference to the specific implementation of the foregoing step 101.

Step 203: The control apparatus verifies the battery pack based on an identifier of the battery pack.

Step 204: When the verification result represents that the battery pack has passed verification, the control apparatus controls, based on the position of the battery pack and the dimension of the battery pack, the pressing apparatus to press down the battery pack.

Here, the foregoing steps 203 and 204 correspond to the foregoing step 102, and can be performed with reference to the specific implementation of the foregoing step 102.

Step 205: After a first inflation pipe of a check apparatus is connected to an inflation port of a pack body of the pressed battery pack, and a second inflation pipe of the check apparatus is connected to an inflation port of a cavity of a cooling system of the pressed battery pack, the control apparatus controls the check apparatus to inflate the pack body of the pressed battery pack and the cavity of the cooling system of the pressed battery pack.

Here, the first inflation pipe is configured to inflate the pack body of the battery pack. The second inflation pipe is configured to inflate the cavity of the cooling system of the battery pack. Exemplarily, the cavity of the cooling system of the battery pack may be a water-cooling plate.

During implementation, the first inflation pipe may include two pipes, and the two pipes are connected to the inflation port and an exhaust port of the pack body of the battery pack to form a battery pack sealing loop. In this way, a certain volume of dry and impurity-free gas can fill into the pack body of the battery pack through the check apparatus. Similarly, the second inflation pipe may include two pipes, and the two pipes form a cooling system sealing loop after an inflation port and an exhaust port of the cavity of the cooling system of the battery pack are connected. In this way, a certain volume of dry and impurity-free gas can fill into the cavity of the cooling system of the battery pack through the check apparatus.

Step 206: The control apparatus controls the check apparatus to check the air tightness of the inflated battery pack and the air tightness of the cooling system of the battery pack.

Here, a second pressure sensor is arranged at the exhaust port of the battery pack, and the second pressure sensor is electrically connected to the control apparatus, so that the control apparatus can monitor an air pressure inside the pack body of the battery pack in real time to determine whether the air tightness in the battery pack meets the requirements.

In an embodiment, a specific implementation of "the control apparatus controls the check apparatus to check the air tightness of the inflated battery pack" in step 206 can be realized as follows: the control apparatus obtains a real-time pressure value of the second pressure sensor; under a condition that the real-time air pressure value meets a second pressure value, the control apparatus determines that the pack body of the battery pack has passed the air tightness check; and under a condition that the real-time air pressure value does not meet the second pressure value, the control apparatus determines that the pack body of the battery pack has failed to pass the air tightness check.

Here, the second pressure value is a basis for determining whether the air tightness of the pack body of the battery pack meets the requirements. The second pressure value can be preset, for example, the second pressure value can be set as a pressure range or a fixed pressure value, which can be set according to actual production requirements, and is not limited in the embodiments of this application. The real-time pressure value refers to a current pressure value in the pack body of the battery pack.

In a feasible embodiment, under a condition that the second pressure value is a pressure range and the real-time pressure value falls within the pressure range, the air tightness check result of the pack body of the battery pack passing the air tightness check is obtained; and under a condition that the real-time pressure value does not fall within the pressure range, an air tightness check result that the pack body of the battery pack has failed to pass the air tightness check is obtained.

Similarly, the exhaust port of the cooling system of the battery pack can also be provided with a third pressure sensor, and the third pressure sensor is electrically connected to the control apparatus, so that the control apparatus can monitor the air pressure inside the cooling system of the battery pack in real time to determine whether the air tightness of the cooling system of the battery pack meets the requirements.

In an embodiment, a specific implementation of "the control apparatus controls the check apparatus to check the air tightness of the cooling system of the battery pack" in step 206 can be realized as follows: the control apparatus obtains a pressure value of the third pressure sensor; under a condition that the pressure value of the third pressure sensor meets the third pressure value, the control apparatus determines that the cooling system of the battery pack has passed the air tightness check; and under a condition that the pressure value of the third pressure sensor does not meet the third pressure value, the control apparatus determines that the cooling system of the battery pack has failed to pass the air tightness check.

Here, the third pressure value is a basis for determining whether the air tightness of the cooling system of the battery pack meets the requirements. The third pressure value can be preset, for example, the third pressure value can be set as a pressure range or a fixed pressure value, which can be set according to actual production requirements, and is not limited in the embodiments of this disclosure.

In a feasible embodiment, under a condition that the third pressure value is a pressure range and the pressure value of the third pressure sensor falls within the pressure range, the air tightness check result that the cooling system of the battery pack has passed the air tightness check is obtained; and under a condition that the pressure value of the third pressure sensor does not fall within the pressure range, the air tightness check result that the cooling system of the battery pack has failed to pass the air tightness check is obtained.

The control apparatus determines the air tightness check result representing that the battery pack has passed the air tightness check under a condition that the pack body of the battery pack has passed the air tightness check and the cooling system of the pool pack has passed the air tightness check; or the control apparatus determines the air tightness check result representing that the battery pack has failed to pass the air tightness check, under a condition that the pack body of the battery pack fails to pass the air tightness test, or the cooling system of the battery pack has failed to pass the air tightness check, or the pack body and the cooling system of the battery pack have failed to pass the air tightness check.

Here, the foregoing steps 205 and 206 correspond to the foregoing step 103, and can be performed with reference to the specific implementation of the foregoing step 103.

In some embodiments, the foregoing step 203 can be realized through the following steps 2031 to 2032.

Step 2031: The control apparatus determines a reference identifier, prestored in the server, of the battery pack to be checked.

Here, the reference identifier is used to verify the battery pack to be checked currently. The reference identifier may refer to the identifier of the battery pack prestored in the server.

Step 2032: The control apparatus verifies the battery pack based on the reference identifier and the identifier of the battery pack.

Understandably, the battery pack is verified based on the reference identifier of the battery pack prestored in the server and the identifier of the battery pack obtained in real time, so that whether the battery pack currently flowing into the air tightness testing station is wrong or not can be determined, guaranteeing the accuracy of subsequent testing.

In a feasible embodiment, a specific implementation of step 2032 can be realized as follows: under a condition that the reference identifier matches the identifier of the battery pack, the control apparatus determines the verification result representing that the battery pack has passed the verification; and under a condition that the reference identifier does not match the identifier of the battery pack, the control apparatus determines the verification result representing that the battery pack has failed to pass the verification.

Here, the reference identifier matches the identifier of the battery pack, which may mean that the reference identifier and the identifier of the battery pack are the same. The reference identifier does not match the identifier of the battery pack, which may mean that the reference identifier and the identifier of the battery pack are different. In this case, under a condition that the reference identifier and the identifier of the battery pack are the same, a verification result representing that the battery pack has passed the verification is determined. Under a condition that the reference identifier and the identifier of the battery pack are different, a verification result representing that the battery pack has failed to pass the verification is determined.

Understandably, the battery pack is verified based on a matching relationship between the reference identifier of the battery pack prestored in the server and the identifier of the battery pack obtained in real time, so that whether the battery pack currently flowing into the air tightness testing station is wrong or not can be determined, guaranteeing the accuracy of subsequent testing.

In an embodiment, the pressing apparatus may include a plurality of pressing blocks, and the "based on the position and dimension of the battery pack, the control apparatus controls the pressing apparatus to press the battery pack" in step 204 can be realized through the following steps 2041 to 2042:

Step 2041: The control apparatus determines at least one first pressing block from the plurality of pressing blocks based on the position of the battery pack, the positions of the plurality of pressing blocks and the dimension of the battery pack.

Here, the position of the battery pack is configured to represent the position of the battery pack in the air tightness testing station. The positions of the plurality of pressing blocks are used to represent the positions of the pressing blocks configured in the air tightness testing station. The dimension of the battery pack is used to represent the size of the battery pack, which mainly refers to a dimension of a surface of the battery pack that is in contact with the pressing block in this disclosure. The at least one first pressing block refers to one or more pressing blocks selected from the plurality of pressing blocks based on the position of the battery pack, the position of the plurality of pressing blocks and the dimension of the battery pack.

In a feasible embodiment, one or more pressing blocks above the position of the battery pack can be determined from the plurality of pressing blocks based on the dimension of the battery pack, and the determined one or more pressing blocks serves as the at least one first pressing block.

Step 2042: The control apparatus controls the at least one first pressing block to press down the battery pack.

Understandably, the control apparatus controls the at least one first pressing block selected from the plurality of pressing blocks in the pressing apparatus to press down the battery pack. In this way, the pressing block is selected adaptively based on the dimension and position of the battery pack, and only some pressing blocks rather than all pressing blocks are used during pressing. As compared with the related art in which all pressing blocks are used during pressing, the control accuracy of the pressing apparatus is higher, and additional mechanical loss can be reduced.

In some embodiments, the pressing apparatus may further include a locking mechanism, and after the foregoing step 2042, the following step 2043 may further be included.

Step 2043: The control apparatus controls the locking mechanism to lock the pressed battery pack.

In a feasible embodiment, the locking mechanism can lock the pressed battery pack to prevent movement of the plurality of pressing blocks, such that the pressed battery pack is locked. Under a condition that the pressing apparatus includes a plurality of driving apparatuses corresponding to the plurality of pressing blocks, and connecting pieces used by each driving apparatus and each pressing block, the positions of the pressing blocks can be fixed by locking the connecting pieces, so that the pressed battery pack is locked.

Understandably, the pressed battery pack is locked by the locking mechanism, so that the position of the battery pack can be fixed, avoiding occurrence of an inaccurate check result caused by displacement of the battery pack during the testing process.

In some embodiments, the foregoing step 2041 can be realized by the following steps 2041a and 2041b.

Step 2041a: The control apparatus determines a plurality of second pressing blocks from the plurality of pressing blocks based on the position of the battery pack and the positions of the plurality of pressing blocks.

Here, the plurality of second pressing blocks refer to a plurality of pressing blocks obtained after primary screening based on the position of the battery pack and the positions of the plurality of pressing blocks.

In a feasible embodiment, among the plurality of pressing blocks, the pressing block above the position of the battery pack can serve as the second pressing block.

Step 2041b: The control apparatus determines the at least one first pressing block from the plurality of second pressing blocks based on the dimension of the battery pack and a preset condition; where the preset condition includes that a ratio of a sum of areas of a pressing surface(s) of the at least one first pressing block and an area of a pressed surface of the battery pack meets the preset ratio.

Here, the preset condition is used for re-screening the plurality of second pressing blocks after primary screening to ensure that a contact surface between the battery pack and the pressing apparatus meets the preset ratio. Exemplarily, the preset ratio may be set to 80% or 85%, which can be set according to the actual production requirements, and is not limited in the embodiments in this disclosure. The pressing surface of the at least one first pressing block may refer to a surface in contact with the battery pack, such as the lower surface of the at least one first pressing block. The pressed surface of the battery pack may refer to a surface that is in contact with the at least one first pressing block, such as the upper surface of the battery pack. The ratio of the sum of areas of the pressing surface(s) of the at least one first pressing block and the area of the pressed surface of the battery pack meets the preset ratio, that is, the contact surface between the battery pack and the pressing apparatus meets the preset ratio.

Exemplarily, if the preset condition is that the ratio of the sum of areas of the pressing surface(s) of the at least one first pressing block and the area of the pressed surface of the battery pack meets 80%, it means that at least 80% of the pressed surface of the battery pack is in contact with the pressing apparatus. In this way, the stability of the battery pack under pressure can be guaranteed.

In a feasible embodiment, the at least one first pressing block meeting a preset condition can be determined from the plurality of second pressing blocks based on the area of the upper surface of the battery pack, and the sum of the lower surface(s) of the at least one first pressing block should be greater than or equal to 80% of the area of the upper surface of the battery pack.

Understandably, the contact surface between the pressed surface of the battery pack and the pressing surface of the at least one first pressing block is defined based on the dimension of the battery pack and the preset condition, so that a pressing block that is more suitable for pressing the current battery pack can be determined, guaranteeing the stability of the battery pack under pressure while reducing the mechanical loss.

In some embodiments, under a condition that each pressing block is provided with a ranging sensor, the foregoing step 2042 can be realized through the following steps 2042a to 2042b.

Step 2042a: The control apparatus determines a distance between the at least one pressing block and the battery pack through the ranging sensor.

Here, without considering the hardware cost, each pressing block can be provided with one ranging sensor to improve the check accuracy of the distance between the at least one pressing block and the battery pack. In another example, considering the hardware cost, the plurality of pressing blocks can be grouped based on the positions of the pressing blocks, and each group corresponds to one ranging sensor.

In a feasible embodiment, the distance between each pressing block and the battery pack can be determined by the ranging sensor corresponding to the at least one pressing block, such that a plurality of distances are obtained. An average value of the plurality of distances is determined as the distance between the at least one pressing block and the battery pack.

In another feasible embodiment, the distance between the at least one pressing block and the battery pack may alternatively be measured manually, and the measured distance can be sent to a control module.

Step 2042b: The control apparatus controls the at least one first pressing block to press down the battery pack based on the distance.

Understandably, at least one first pressing block is controlled to press down the battery pack based on the distance between the at least one pressing block and the battery pack determined by the ranging sensor. In this way, appropriate pressure can be applied to the battery pack, and the inaccuracy of the air tightness check result of the battery pack, caused by an excessively large or excessively small pressure, is avoided.

In other embodiments, under a condition that each pressing block is provided with a first pressure sensor, a specific implementation of the foregoing step 2042 can be realized as follows: the control apparatus controls the at least one first pressing block to press down the battery pack until the control apparatus checks that the pressure value of the first pressure sensor reaches the first pressure value, and stops the pressing operation.

Here, the first pressure sensor is configured to monitor a pressure received by the pressing block. The first pressure value is a basis for determining whether to stop the pressing operation. The first pressure value may be preset, and specifically may be set according to the actual production scenario and production requirements. This is not limited in the embodiments of this disclosure.

In a feasible embodiment, since the upper surface of the battery pack is in a stepped shape, an angle of each first pressing block can be adjusted by the driving apparatus of each first pressing block during pressing, so that each first pressing block can be more closely attached to the upper surface of the battery pack, such that the pressure received by each first pressing block can reach the first pressure value.

Understandably, whether to stop the pressing operation or not is determined by comparing the pressure value of the first pressure sensor with the first pressure value. In this way, appropriate pressure can be applied to the battery pack, and the inaccuracy of the air tightness check result of the battery pack, caused by an excessively large or excessively small pressure, is avoided.

Based on the foregoing embodiment, the air tightness check method provided in this embodiment of this disclosure may further include the following steps 207 to 209.

Step 207: When the air tightness check result represents that the battery pack has passed the air tightness check, the control apparatus controls the pressing apparatus to rise.

Here, if the locking mechanism is used after pressing, the control apparatus needs to control the locking mechanism to unlock the battery pack and control the pressing apparatus to rise after unlocking, under a condition that the air tightness check result represents that the battery pack has passed the air tightness check.

Step 208: The control apparatus stores the air tightness check result into the server.

Understandably, the purpose of storing the air tightness check results into the server is to facilitate the subsequent obtaining of air tightness check results and ensure the traceability of the checking process.

Step 209: The control apparatus controls the battery pack to flow out of the air tightness testing station.

Understandably, the battery pack can be controlled to flow out of the air tightness testing station under a condition that the air tightness check result represents that the battery pack has passed the air-tight check. In addition, the air tightness check result can be stored into the server, facilitating the subsequent obtaining of the air tightness check results and ensuring the traceability of the check process.

In a feasible embodiment, the control apparatus can control the automated guided vehicle to guide the battery pack to flow out of the air tightness testing station.

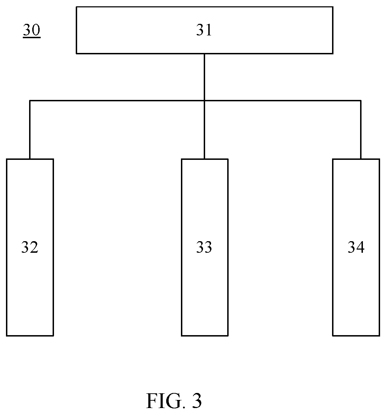

An embodiment of this disclosure provides a test system. As shown in FIG. 3, the test system 30 includes a control apparatus 31, a scanning apparatus 32, a pressing apparatus 33 and a check apparatus 34.

The control apparatus 31 is configured to control the scanning apparatus 32 to identify a battery pack in response to the battery pack flowing into the air tightness testing station; control, based on the parameter information of the battery pack identified by the scanning apparatus 32, the pressing apparatus 33 to press down the battery pack; and control the check apparatus 34 to check the air tightness of the pressed battery pack. The parameter information of the battery pack represents basic attributes of the battery pack and a position of the battery pack in the air tightness testing station.

The scanning apparatus 32 is configured to identify the battery pack.

The pressing apparatus 33 is configured to press down the battery pack.

The check apparatus 34 is configured to check the air tightness of the pressed battery pack.

Here, the scanning apparatus 32 may be any one of a laser scanner, an industrial scanner, a wireless scanner, a fixed scanner and a bar code scanner. The control apparatus 31 may be an industrial personal computer cabinet. The check apparatus 34 may be an air tightness instrument integrated cabinet. The pressing apparatus 33 may refer to an apparatus formed by plurality of pressing blocks integrated.

Understandably, through the test system 30 integrated with the control apparatus 31, the scanning apparatus 32, the pressing apparatus 33 and the check apparatus 34, the automatic identification of the battery pack, the automatic pressing to the battery pack and the automatic check of the air tightness of the battery pack can be realized. In this way, all kinds of control of the air tightness testing station are highly integrated into the control apparatus 31 of the test system 30, and the process control of the whole air tightness check and the mechanical trajectory control of the pressing apparatus 33 can be realized through the control apparatus 31 of the test system 30. Thus, regardless of the type of battery pack currently flowing into the air tightness testing station, the air tightness of the inflowing battery pack can be automatically checked, and the whole check process does not need manual operation, so that the check rate is increased and the cost of changeover is reduced.

In some embodiments, the parameter information of the battery pack includes an identifier of the battery pack. The control apparatus 31 is further configured to verify the battery pack based on the identifier of the battery pack.

Understandably, the battery pack is verified by the control apparatus 31, and the error-proofing and fool-proofing control can also be performed in the testing process, so as to reduce that the impact to subsequent checks caused when the battery pack not belonging to the current production line flows into the air tightness testing station due to manual operation errors. Thus, the accuracy of subsequent checks can be improved.

In some embodiments, the parameter information of the battery pack includes a position of the battery pack and a dimension of the battery pack. The pressing apparatus 33 includes a plurality of pressing blocks. The control apparatus 31 is further configured to determine at least one first pressing block from the plurality of pressing blocks based on the position of the battery pack, the positions of the plurality of pressing blocks and the dimension of the battery pack; and control the at least one first pressing block to press down the battery pack.

Understandably, the control apparatus 31 controls at least one first pressing block selected from the plurality of pressing blocks in the pressing apparatus 33 to press down the battery pack. In this way, the pressing block is selected adaptively based on the dimension and position of the battery pack, and only some pressing blocks rather than all pressing blocks are used during pressing. As compared with the related art in which all pressing blocks are used during pressing, the control accuracy of the pressing apparatus 33 is higher, and additional mechanical loss can be reduced.

In some embodiments, the control apparatus 31 is further configured to, in response to a plurality of battery packs flowing into a plurality of air tightness testing stations, control the scanning apparatus 32, the pressing apparatus 33 and the check apparatus 34 in each air tightness testing station in parallel to check the air tightness of the corresponding battery packs.

Understandably, the air tightness check of the plurality of air tightness testing stations is controlled by one control apparatus 31. In this way, the efficiency of air tightness check can be improved, time consumption can be reduced, and the layout of the test system can be simplified.

In some embodiments, each pressing block is provided with a ranging sensor; and the ranging sensor is configured to measure a distance between each pressing block and the battery pack.

In some embodiments, each pressing block is provided with a first pressure sensor; and the first pressure sensor is configured to monitor a pressure received by each pressing block.

In some embodiments, a second pressure sensor is arranged at an exhaust port of the battery pack; the second pressure sensor is configured to monitor an air pressure in the battery pack; correspondingly, a third pressure sensor is arranged at an exhaust port of a cavity of a cooling system of the battery pack; and the third pressure sensor is configured to monitor an air pressure in the cooling system of the battery pack.

In some embodiments, the pressing apparatus 33 includes a plurality of driving apparatuses. The plurality of driving apparatuses are in one-to-one correspondence with the plurality of pressing blocks. Each of the plurality of driving apparatuses is configured to drive the corresponding pressing block to move towards the battery pack, so as to realize the pressing operation of the battery pack.

Here, the driving apparatus may be an air cylinder or a motor. The pressing apparatus may further include connecting pieces, and each driving apparatus and each pressing block are connected through the connecting piece. The driving apparatus can also adjust a pressing angle of each first pressing block to make each pressing block be more closely attached to the upper surface of the battery pack better.

In some embodiments, the pressing apparatus 33 further includes a locking mechanism for the plurality of pressing blocks. The locking mechanism is configured to lock the pressed battery pack.

Understandably, the pressed battery pack is locked by the locking mechanism, so that the position of the battery pack can be fixed, avoiding occurrence of an inaccurate check result caused by displacement of the battery pack during the testing process.

In some embodiments, the control apparatus 31 is further configured to control an automated guided vehicle to guide the battery pack to flow into the air tightness testing station, and the control apparatus 31 is further configured to control the automated guided vehicle to guide the battery pack to flow out of the air tightness testing station.

Understandably, with the automated guided vehicle being controlled, the battery pack can automatically flow into the air tightness testing station or flow out of the air tightness testing station.

The following describes an application of the air tightness check method provided in the embodiments of this disclosure in actual scenarios.

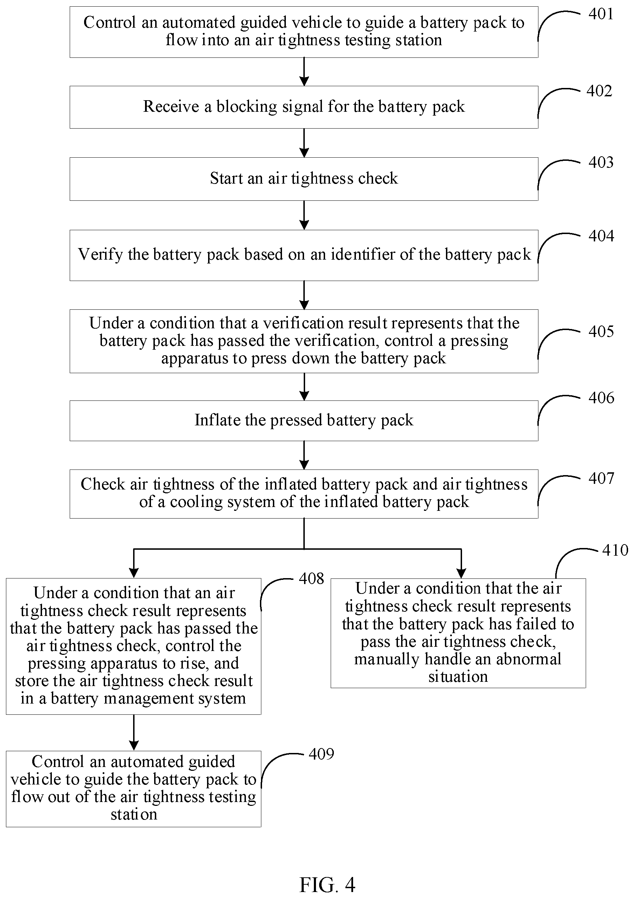

FIG. 4 is a third schematic flowchart of an implementation of an air tightness check method according to an embodiment of this disclosure, which is applied to a control apparatus of a test system. As shown in FIG. 4, the method includes the following steps 401 to 410.

Step 401: Control an automated guided vehicle to guide a battery pack to flow into an air tightness testing station.

Step 402: Receive a blocking signal for the battery pack.

Step 403: Start an air tightness check.

Step 404: Verify the battery pack based on an identifier of the battery pack.

Step 405: Under a condition that a verification result represents that the battery pack has passed the verification, control a pressing apparatus to press down the battery pack.

Step 406: Inflate the pressed battery pack.

Step 407: Check the air tightness of the inflated battery pack and the air tightness of a cooling system of the inflated battery pack.

Step 408 and step 409 are performed under a condition that the air tightness check result represents that the battery pack has passed the air tightness check, and step 410 is performed under a condition that the air tightness check result represents that the battery pack has failed to pass the air tightness check.

Step 408: Under a condition that the air tightness check result represents that the battery pack has passed the air tightness check, control the pressing apparatus to rise, and store the air tightness check result into the server.

Step 409: Control the automated guided vehicle to guide the battery pack to flow out of the air tightness testing station.

Step 410: Under a condition that the air tightness check result represents that the battery pack has failed to pass the air tightness check, manually handle an abnormal situation.

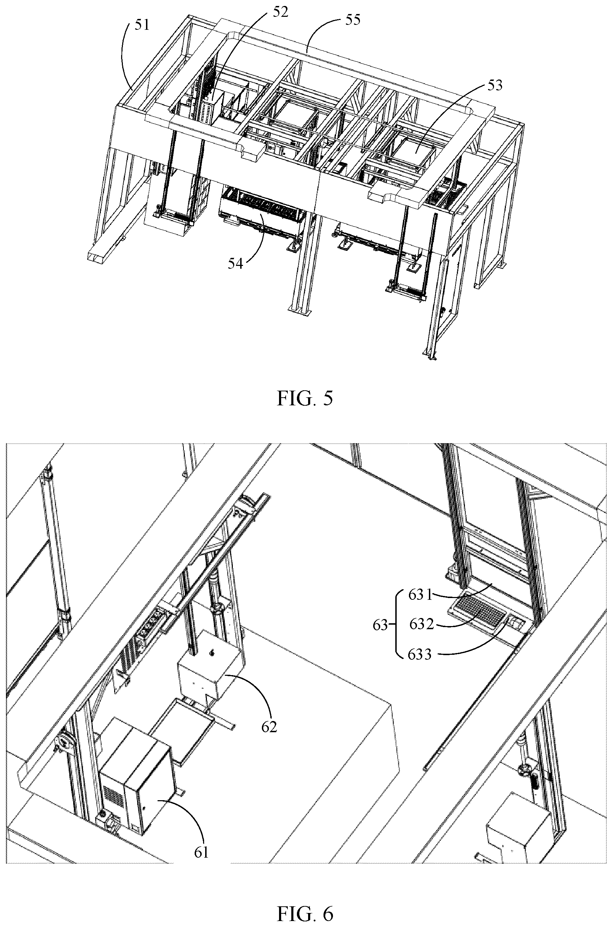

FIG. 5 is a first schematic diagram of a layout of a test system according to an embodiment of this disclosure. As shown in FIG. 5, the test system is arranged in a frame 51 of an air tightness testing station, and the test system may include two air tightness testing stations. The air tightness testing station may specifically include an industrial personal computer cabinet 52 (a control apparatus), an air tightness instrument integrated cabinet 53 (a check apparatus), and an apparatus formed by a plurality of pressing blocks integrated 54 (a pressing apparatus). The trunking 55 arranged on the industrial personal computer cabinet 52 is configured to establish a wired connection between the industrial personal computer cabinet 52, the air tightness instrument integrated cabinet 53 and the apparatus formed by a plurality of pressing blocks integrated 54.

FIG. 6 is a second schematic diagram of a layout of a test system according to an embodiment of this disclosure. As shown in FIG. 6, the test system may further include an end of line (End Of Line, EOL) adapter box 61, an insulating glove placement region 62, and a display cabinet 63. The EOL adapter box is configured to perform an EOL test for a battery pack. The insulating glove placement region 62 is used for placing insulating gloves, such that an operator blocks the battery pack after wearing the insulating gloves. The display cabinet 63 is configured to interact with a user, such that the user can know the situation of air tightness testing in real time and can conveniently perform corresponding handling according to the situation of air tightness testing. The display cabinet 63 may include a display 631, a keyboard 632 and a mouse 633. Exemplarily, the display cabinet 63 and the industrial personal computer cabinet 52 may be arranged on a same rack.

It should be noted herein that the foregoing descriptions of the embodiments tend to emphasize the differences between the embodiments, and the identical aspects or similarities thereof can refer to each other. The descriptions of the foregoing system embodiments are similar to the descriptions of the foregoing method embodiments, and have similar beneficial effects as the method embodiments. For the technical details not disclosed in the system embodiments of this disclosure, reference is made to the descriptions of the method embodiments of this disclosure for understanding.

It should be understood that reference to "one embodiment" or "an embodiment" throughout the specification means that particular features, structures or characteristics related to an embodiment are included in at least one embodiment of this disclosure. Therefore, the appearance of "in an embodiment" or "in an embodiment" in various places throughout the specification does not necessarily refer to the same embodiment. Furthermore, these particular features, structures or characteristics may be combined in any suitable manner in one or more embodiments. Understandably, in the embodiments of this disclosure, the sequence number of each step/process does not mean an implementation order. The implementation order of each step/process should be determined based on its functionality and intrinsic logic, and does not constitute any limitation on the implementation process of the embodiments of this disclosure. The foregoing sequence numbers of the embodiments of this disclosure are merely for ease of description, and do not indicate different merits of the embodiments.

It should be noted that, as used herein, the terms "include", "comprise", and any variation thereof are intended to cover a non-exclusive inclusion, so that a process, method, object, or apparatus that includes a series of elements not only includes those elements but also includes other elements not expressly listed, or further includes elements inherent to such process, method, object, or apparatus. Without more constraints, an element preceded by "includes a ..." does not exclude existence of other identical elements in the process, method, article, or apparatus that includes the element.

In some embodiments provided in this disclosure, it should be understood that the disclosed devices and methods can be realized in other ways. The device embodiments described above are merely illustrative. For example, the division of the units is only a logical function division, and there may be other division methods in actual implementation, for example: a plurality of units or components can be combined or integrated into another system, or some features can be ignored or skipped. In addition, a mutual coupling or direct coupling or communication connection between the components illustrated or discussed herein may be an indirect coupling or communication connection implemented through some interfaces, devices, or units, and may be in electrical, mechanical or other forms.

The units described above as separate components may or may not be physically separated, and the components displayed as units may or may not be physical units. They may be located in one place or distributed to a plurality of network units. Some or all of the units may be selected according to actual needs to achieve the purpose of the solution of the embodiments.

In addition, all the functional units in the embodiments of this disclosure can be integrated into one processing unit, or each unit can be separately used as one unit, or two or more units can be integrated into one unit. The above integrated units can be realized in the form of hardware, or in the form of hardware plus software functional units.

The foregoing descriptions are merely specific implementations of, but are not intended to limit the protection scope of this disclosure. Any variation or replacement readily figured out by persons skilled in the art within the technical scope disclosed in this disclosure shall fall within the protection scope of this application.

### Industrial applicability

The embodiments of this disclosure provide an air tightness check method and a test system. The air tightness check method is applied to the test system and includes a control apparatus, a scanning apparatus, a pressing apparatus and a check apparatus. The air tightness check method includes the following steps: in response to a battery pack flowing into an air tightness testing station, controlling, by the control apparatus, the scanning apparatus to identify the battery pack to obtain parameter information of the battery pack, where the parameter information of the battery pack represents basic attributes of the battery pack and a position of the battery pack in the air tightness testing station; controlling, by the control apparatus based on the parameter information of the battery pack, the pressing apparatus to press down the battery pack; and controlling, by the control apparatus, the check apparatus to check the air tightness of the pressed battery pack. Regardless of the type of battery pack currently flowing into the air tightness testing station, the air tightness of the inflowing battery pack can be automatically checked, the check rate is high, and the cost of changeover is low.

## Claims

1. An air tightness check method applied to a test system, wherein the test system comprises a control apparatus, a scanning apparatus, a pressing apparatus, and a check apparatus, and the air tightness check method comprises:
in response to a battery pack flowing into an air tightness testing station, controlling, by the control apparatus, the scanning apparatus to identify the battery pack to obtain parameter information of the battery pack; wherein the parameter information of the battery pack represents basic attributes of the battery pack and a position of the battery pack in the air tightness testing station;
controlling, by the control apparatus based on the parameter information of the battery pack, the pressing apparatus to press down the battery pack; and
controlling, by the control apparatus, the check apparatus to check air tightness of the pressed battery pack.

2. The air tightness check method according to claim 1, wherein the controlling, by the control apparatus, the scanning apparatus to identify the battery pack comprises:
determining, by the control apparatus, whether an inflation port of the battery pack has been blocked; and
when it is determined that the inflation port of the battery pack has been blocked, controlling, by the control apparatus, the scanning apparatus to identify the battery pack.

3. The air tightness check method according to claim 2, wherein the determining, by the control apparatus, whether the inflation port of the battery pack has been blocked comprises:
in response to a blocking signal for the battery pack, determining, by the control apparatus, that the inflation port of the battery pack has been blocked; or
in response to a test instruction for the battery pack, determining, by the control apparatus based on blocking information in the test instruction, that the inflation port of the battery pack has been blocked.

4. The air tightness check method according to any one of claims 1 to 3, wherein the parameter information of the battery pack comprises an identifier of the battery pack, a position of the battery pack, and a dimension of the battery pack; and
the controlling, by the control apparatus based on the parameter information of the battery pack, the pressing apparatus to press down the battery pack comprises:
verifying, by the control apparatus, the battery pack based on the identifier of the battery pack;
under a condition that a verification result represents that the battery pack has passed the verification, controlling, by the control apparatus based on the position of the battery pack and the dimension of the battery pack, the pressing apparatus to press down the battery pack.

5. The air tightness check method according to claim 4, wherein the verifying, by the control apparatus, the battery pack based on the identifier of the battery pack comprises:
determining, by the control apparatus, a reference identifier, prestored in a server, of a battery pack to be checked; and
verifying, by the control apparatus, the battery pack based on the reference identifier and the identifier of the battery pack.

6. The air tightness check method according to claim 5, wherein the verifying, by the control apparatus, the battery pack based on the reference identifier and the identifier of the battery pack comprises:
under a condition that the reference identifier matches the identifier of the battery pack, determining, by the control apparatus, a verification result representing that the battery pack has passed the verification; or
under a condition that the reference identifier does not match the identifier of the battery pack, determining, by the control apparatus, a verification result representing that the battery pack has failed to pass the verification.

7. The air tightness check method according to any one of claims 4 to 6, wherein the pressing apparatus comprises a plurality of pressing blocks; and
the controlling, by the control apparatus based on the position of the battery pack and the dimension of the battery pack, the pressing apparatus to press down the battery pack comprises:
determining, by the control apparatus, at least one first pressing block from the plurality of pressing blocks based on the position of the battery pack, positions of the plurality of pressing blocks, and the dimension of the battery pack; and
controlling, by the control apparatus, the at least one first pressing block to press down the battery pack.

8. The air tightness check method according to claim 7, wherein the determining, by the control apparatus, at least one first pressing block from the plurality of pressing blocks based on the position of the battery pack, positions of the plurality of pressing blocks, and the dimension of the battery pack comprises:
determining, by the control apparatus, a plurality of second pressing blocks from the plurality of pressing blocks based on the position of the battery pack and the positions of the plurality of pressing blocks; and
determining, by the control apparatus, the at least one first pressing block from the plurality of second pressing blocks based on the dimension of the battery pack and a preset condition; wherein the preset condition comprises that a ratio of a sum of areas of a pressing surface(s) of the at least one first pressing block and an area of a pressed surface of the battery pack meets a preset ratio.

9. The air tightness check method according to any one of claims 1 to 8, wherein the pressing apparatus further comprises a locking mechanism; and the air tightness check method further comprises:
controlling, by the control apparatus, the locking mechanism to lock the pressed battery pack.

10. The air tightness check method according to any one of claims 1 to 8, wherein the controlling, by the control apparatus, the check apparatus to check air tightness of the pressed battery pack comprises:
controlling, by the control apparatus, the check apparatus to inflate a pack body of the pressed battery pack and a cavity of a cooling system of the pressed battery pack, after a first inflation pipe of the check apparatus is connected to an inflation port of the pack body of the pressed battery pack and a second inflation pipe of the check apparatus is connected to an inflation port of the cavity of the cooling system of the pressed battery pack; and
controlling, by the control apparatus, the check apparatus to check the air tightness of the inflated battery pack and air tightness of the inflated cooling system of the battery pack.

11. The air tightness check method according to claim 10, wherein the air tightness check method further comprises:
under a condition that an air tightness check result represents that the battery pack has passed the air tightness check, controlling, by the control apparatus, the pressing apparatus to rise;
storing, by the control apparatus, the air tightness check result to the server; and
controlling, by the control apparatus, the battery pack to flow out of the air tightness testing station.

12. The air tightness check method according to claim 11, wherein the air tightness check method further comprises:
controlling, by the control apparatus, an automated guided vehicle to guide the battery pack to flow into the air tightness testing station; and
controlling, by the control apparatus, the automated guided vehicle to guide the battery pack to flow out of the air tightness testing station.

13. The method according to claim 7 or 8, wherein each pressing block is provided with a ranging sensor; and
the controlling, by the control apparatus, the at least one first pressing block to press down the battery pack comprises:
determining, by the control apparatus, a distance between the at least one pressing block and the battery pack through the ranging sensor; and
controlling, by the control apparatus based on the distance, the at least one first pressing block to press down the battery pack.

14. The method according to claim 7 or 8, wherein each pressing block is provided with a first pressure sensor; wherein
the controlling, by the control apparatus, the at least one first pressing block to press down the battery pack comprises:
controlling, by the control apparatus, the at least one first pressing block to press down the battery pack and to stop the pressing operation after the control apparatus detects that a pressure value of the first pressure sensor reaches a first pressure value.

15. The air tightness check method according to any one of claims 10 to 12, wherein a second pressure sensor is arranged at an exhaust port of the battery pack; and
the controlling, by the control apparatus, the check apparatus to check the air tightness of the inflated battery pack comprises:
obtaining, by the control apparatus, a real-time pressure value of the second pressure sensor; and
under a condition that the real-time air pressure value meets a second pressure value, determining, by the control apparatus, that the pack body of the battery pack has passed the air tightness check; or
under a condition that the real-time air pressure value does not meet the second pressure value, determining, by the control apparatus, that the pack body of the battery pack has failed to pass the air tightness check.

16. A test system, wherein the test system comprises: a control apparatus, a scanning apparatus, a pressing apparatus, and a check apparatus; wherein
the control apparatus is configured to, in response to a battery pack flowing into an air tightness testing station, control the scanning apparatus to identify the battery pack; control, based on parameter information of the battery pack identified by the scanning apparatus, the pressing apparatus to press down the battery pack; and control the check apparatus to check air tightness of the pressed battery pack; wherein the parameter information of the battery pack represents basic attributes of the battery pack and a position of the battery pack in the air tightness testing station;
the scanning apparatus is configured to identify the battery pack;
the pressing apparatus is configured to press down the battery pack; and
the check apparatus is configured to check the air tightness of the pressed battery pack.

17. The test system according to claim 16, wherein the parameter information of the battery pack comprises an identifier of the battery pack; and
the control apparatus is further configured to verify the battery pack based on the identifier of the battery pack.

18. The test system according to claim 16 or 17, wherein the parameter information of the battery pack comprises a position of the battery pack and a dimension of the battery pack; the pressing apparatus comprises a plurality of pressing blocks; and
the control apparatus is further configured to determine at least one first pressing block from the plurality of pressing blocks based on the position of the battery pack, positions of the plurality of pressing blocks, and the dimension of the battery pack, and control the at least one first pressing block to press down the battery pack.

19. The test system according to any one of claims 16 to 18, wherein the control apparatus is further configured to, in response to the plurality of battery packs flowing into a plurality of air tightness testing stations, control the scanning apparatus, the pressing apparatus, and the check apparatus in each air tightness testing station in parallel to perform air tightness check on the corresponding battery pack.

20. The test system according to claim 18, wherein each pressing block is provided with a ranging sensor; and
the ranging sensor is configured to measure a distance between each pressing block and the battery pack.

21. The test system according to claim 18 or 20, wherein each pressing block is provided with a first pressure sensor; and
the first pressure sensor is configured to monitor a pressure received by each pressing block.

22. The test system according to any one of claims 16 to 21, wherein a second pressure sensor is arranged at an exhaust port of the battery pack; wherein
the second pressure sensor is configured to monitor an air pressure in the battery pack; and
correspondingly, a third pressure sensor is arranged at an exhaust port of a cavity of a cooling system of the battery pack; wherein
the third pressure sensor is configured to monitor an air pressure in the cooling system of the battery pack.

23. The test system according to claim 18, wherein the pressing apparatus comprises a plurality of driving apparatuses; the plurality of driving apparatuses are in one-to-one correspondence with the plurality of pressing blocks; and
each of the plurality of driving apparatuses is configured to drive the corresponding pressing block to move towards the battery pack, so as to realize a pressing operation on the battery pack.

24. The test system according to claim 18 or 23, wherein the pressing apparatus further comprises a locking mechanism for the plurality of pressing blocks, wherein
the locking mechanism is configured to lock the pressed battery pack.

25. The test system according to any one of claims 16 to 24, wherein the control apparatus is further configured to control an automated guided vehicle to guide the battery pack to flow into the air tightness testing station; and control the automated guided vehicle to guide the battery pack to flow out of the air tightness testing station.
